# EUROPEAN PATENT APPLICATION

(11) **EP 4 712 250 A1**
(43) Date of publication of application: **18.03.2026**
(21) Application number: 24901078.6
(22) Date of filing: 05.12.2024
(51) Int. Cl.: H01M 50/528, H01M 50/533, B23K 9/14, B23K 20/10

(54) **METHOD FOR MANUFACTURING SECONDARY BATTERY**

(30) Priority: 07.12.2023 KR 20230176248
(71) Applicant: LG Energy Solution, Ltd., Seoul 07335 (KR)
(72) Inventor: PARK, Seong Geun, Daejeon 34122 (KR); LIM, Sung Sang, Daejeon 34122 (KR); KIM, Sung Ryul, Daejeon 34122 (KR)
(74) Representative: Goddar, Heinz J.
(86) International application number: PCT/KR2024/019782
(87) International publication number: WO 2025/121892

(57) **Abstract**

Example embodiments provide a secondary battery manufacturing method. The secondary battery manufacturing method includes collapsing an embossed structure of an electrode tab and welding a battery case to a collapsed part of the embossed structure.

## Description

### [Technical Field]

The present invention relates to a secondary battery manufacturing method. More specifically, the present invention relates to a manufacturing method of a secondary battery with a cylindrical case. The present application claims the benefit of priority based on Korean Patent Application No. 10-2023-0176248, filed on December 7, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

The manufacture of a secondary battery includes an electrode process including mixing, coating, roll pressing, slitting, and notching processes, an assembly process of embedding an electrode assembly into a case, and a formation process of electrically activating and stabilizing battery cells. After the formation process, the battery cells may be stacked to form a cell stack. The cell stack may be mounted in a housing together with a module frame or be mounted directly in the housing without the module frame.

### [Disclosure]

### [Technical Problem]

The present invention is directed to providing a manufacturing method of a secondary battery with improved reliability.

### [Technical Solution]

Embodiments of the present invention provide a secondary battery manufacturing method. The secondary battery manufacturing method includes collapsing an embossed structure of an electrode tab and welding a battery case to a collapsed part of the embossed structure of the electrode tab.

The collapsing of the embossed structure of the electrode tab may result in an increase of a current carrying area between the battery case and the electrode tab.

The collapsing of the embossed structure of the electrode tab may include applying a first voltage waveform to the electrode tab by a first electrode rod, and the welding of the battery case may include applying a second voltage waveform, which is different from the first voltage waveform, to the electrode tab by the first electrode rod.

The first voltage waveform applied to the electrode tab may soften the electrode tab.

A temperature of the electrode tab to which the first voltage waveform is applied may be less than or equal to a melting point of the electrode tab.

The second voltage waveform applied to the electrode tab may melt the electrode tab.

The temperature of the electrode tab to which the second voltage waveform is applied may be greater than or equal to the melting point.

Each of the first voltage waveform and the second voltage waveform may include a square waveform with a ramp section.

A first peak of the first voltage waveform may be different from a second peak of the second voltage waveform.

The first peak of the first voltage waveform may be lower than the second peak of the second voltage waveform.

A duration of the first voltage waveform may be different from a duration of the second voltage waveform.

The duration of the first voltage waveform may be shorter than the duration of the second voltage waveform.

The collapsing of the embossed structure of the electrode tab may include applying a first current waveform to the electrode tab by the first electrode rod, and the welding of the battery case includes applying a second current waveform, which is different from the first current waveform, to the electrode tab by the first electrode rod.

A first peak of the first current waveform may be lower than a second peak of the second current waveform.

A first peak of the first current waveform may be different from a second peak of the second current waveform.

The duration of the first current waveform may be different from the duration of the second current waveform.

The duration of the first current waveform may be shorter than the duration of the second current waveform.

### [Advantageous Effects]

According to a secondary battery manufacturing method of embodiments of the present invention, a current carrying area between an electrode tab and a battery case can be ensured by collapse of an embossed structure of the electrode tab, thereby improving stability and reliability of the manufacture of a secondary battery.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### [Brief Description of the Drawings]

FIG. 1 is a flowchart of a secondary battery manufacturing method according to embodiments.
FIG. 2 is a cross-sectional view for describing a secondary battery manufacturing method according to embodiments.
FIGS. 3 to 5 are enlarged partial cross-sectional views of a part of FIG. 2.
FIG. 6 is a graph for describing a secondary battery manufacturing method according to embodiments.
FIGS. 7 and 8 are diagrams for describing an effect of a secondary battery manufacturing method according to embodiments.
FIG. 9 is a graph for describing a welding method according to other embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

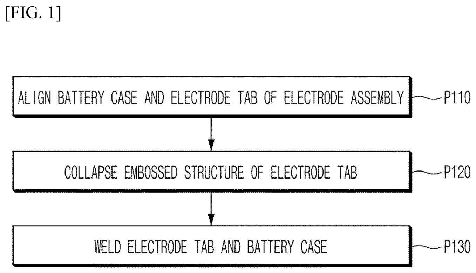

FIG. 1 is a flowchart of a secondary battery manufacturing method according to embodiments.

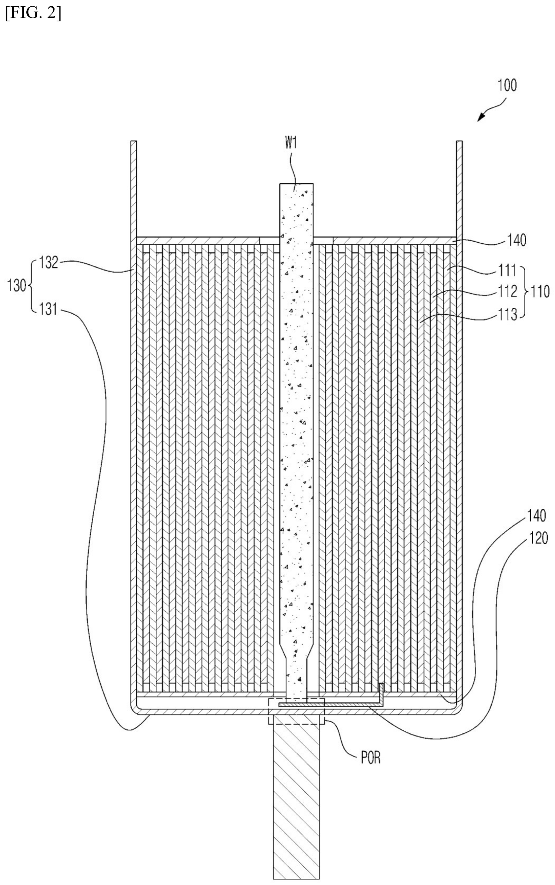

FIG. 2 is a cross-sectional viewfor describing a secondary battery manufacturing method according to embodiments.

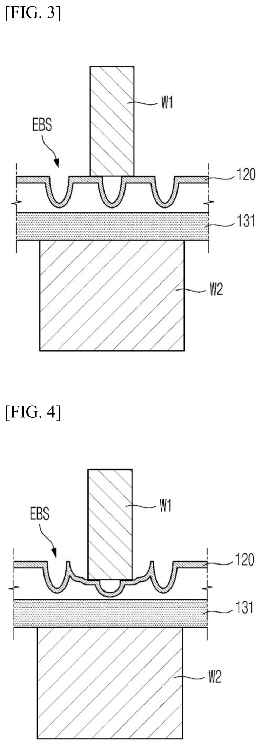

FIGS. 3 to 5 are enlarged partial cross-sectional views of a part POR of FIG. 2.

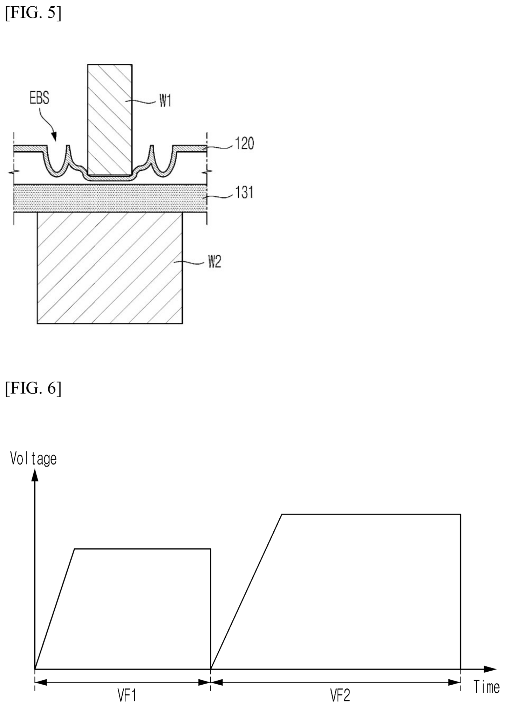

FIG. 6 is a graph for describing a secondary battery manufacturing method according to embodiments. In FIG. 6, the horizontal axis represents time expressed in arbitrary units and the vertical axis represents voltage expressed in arbitrary units.

Referring to FIGS. 1 to 3, in P110, an electrode tab 120 of an electrode assembly 110 and a battery case 130 may be aligned.

The electrode assembly 110 may include a positive electrode 111, a separator 112, and a negative electrode 113. The electrode assembly 110 may be of a jelly-roll type. The positive electrode 111 may include a positive electrode current collector and a positive electrode active material. The negative electrode 113 may include a negative electrode current collector and a negative electrode active material.

A thickness of the positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of the negative electrode current collector may be in a range of about 3 µm to about 500 µm. The negative electrode current collector may not cause a chemical change in a finally manufactured secondary battery and may have high conductivity. The negative electrode current collector may include copper, stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

The positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, Cu, Fe, Mg, B, Cr, Zn or Ga, and 0.01 ≤y≤0.7); lithium nickel cobalt manganese compound oxide expressed by a chemical formula of Li_{1+z}Ni_{b}Mn_{c}Co_{1-(b+c+d})M_{d}O₍₂₋ₑ₎Aₑ, e.g., Li_{1+z}Ni_{1/3}Co_{1/3}Mn_{1/3}O₂ or Li_{1+z}Ni_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LiₓWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The positive electrode 111 may include a coated part to which the positive electrode active material is applied, and an uncoated part to which the positive electrode active material is not applied and thus on which the positive electrode current collector is exposed. The negative electrode 113 may include a coated part to which the negative electrode active material is applied, and an uncoated part to which the negative electrode active material is not applied and thus on which the negative electrode current collector is exposed. The negative electrode tab 120 may be coupled to the uncoated part of the negative electrode 113. The negative electrode tab 120 may be fixed to the negative electrode 113 by, for example, ultrasonic welding or the like.

An insulating plate 140 may be provided under the electrode assembly 110 to prevent a short circuit between the battery case 130 and the electrode assembly 110. The insulating plate 140 may be also provided on the electrode assembly 110 to prevent a short circuit between the electrode assembly 110 and a cap assembly (not shown). The cap assembly may be coupled to the battery case 130 and isolate the inside of the battery cell and the battery case 130 from the outside.

The battery case 130 may include aluminum (Al), iron (Fe), or an alloy thereof. The battery case 130 may accommodate the electrode assembly 110 having a cylindrical shape therein. The battery case may include a bottom plate 131 and a side surface 132. An upper part of the side surface 132 may be provided with an opening into which the electrode assembly 110 is inserted. The opening in the side surface 132 may be closed by the cap assembly. As a non-limiting example, the side surface 132 may have a cylindrical shape. The side surface 132 may have a quadrangular column shape.

When the electrode tab 120 and the battery case 130 are aligned, the electrode tab 120 and the battery case 130 may be pressed by first and second welding rods W1 and W2. The first welding rod W1 may penetrate the core of the electrode assembly 110. The first welding rod W1 may be in contact with the electrode tab 120. The second welding rod W2 may be in contact with the bottom plate 131 of the battery case 130. The electrode tab 120 and the battery case 130 may be brought into contact with each other when pressed by the first and second welding rods W1 and W2.

Next, referring to FIGS. 1, 4, and 6, in P120, an embossed structure EBS of the electrode tab 120 may be collapsed. Due to the collapsing of the embossed structure EBS of the electrode tab 120, a current carrying area between the bottom plate 131 of the battery case 130 and the electrode tab 120 may increase.

The collapsing of the embossed structure EBS of the electrode tab may include applying a first voltage waveform VF1 to the electrode tab 120 by the first electrode rod W1. The applying of the first voltage waveform VF1 to the electrode tab 120 by the first electrode rod W1 should be understood to mean adjusting a voltage difference between the first electrode rod W1 and the second electrode rod W2 to follow the first voltage waveform VF1.

The applying of the first voltage waveform VF1 may induce a current to sequentially flow through the first electrode rod W1, the electrode tab 120, the battery case 130, and the second electrode rod W2, and a temperature of the electrode tab 120 may be increased by electric heating due to the current. The temperature of the electrode tab 120 to which the first voltage waveform VF1 is applied may be less than or equal to a melting point of the electrode tab 120. Accordingly, the electrode tab 120 may not be melted regardless of the first voltage waveform VF1 applied thereto. The electrode tab 120 may be softened by the applying of the first voltage waveform VF1 and thus the embossed structure EBS thereof may collapse.

Next, referring to FIGS. 1, 5, and 6, in P130, the electrode tab 120 and the battery case 130 may be welded together. The welding of the electrode tab 120 and the battery case 130 together may include applying a second voltage waveform VF2 to the electrode tab 120 by the second electrode rod W2. The applying of the second voltage waveform VF2 to the electrode tab 120 by the second electrode rod W2 should be understood to mean adjusting the voltage difference between the first electrode rod W1 and the second electrode rod W2 to follow the second voltage waveform VF2.

The applying of the second voltage waveform VF2 may induce a current to sequentially flow through the first electrode rod W1, the electrode tab 120, the battery case 130, and the second electrode rod W2, and temperatures of the electrode tab 120 and the battery case 130 may be increased by electric heating due to the current. The temperature of the electrode tab 120 to which the second voltage waveform VF2 is applied may be greater than or equal to the melting point of the electrode tab 120. The temperature of the battery case 130 to which the second voltage waveform VF2 is applied may be greater than or equal to a melting point of the battery case 130. Accordingly, the electrode tab 120 or the battery case 130 may be melted by the applying of the first voltage waveform VF1.

In embodiments, due to the collapse of the embossed structure EBS in P120, a sufficient current carrying area between the electrode tab 120 and the battery case 130 may be secured to improve the reliability of welding of the electrode tab 120 and the battery case 130.

According to embodiments, the first voltage waveform VF1 and the second voltage waveform VF2 may be square waveforms each including a ramping section. However, embodiments are not limited thereto, and the first voltage waveform VF1 and the second voltage waveform VF2 may have various waveforms such as a triangular waveform, a sawtooth waveform, and a sine waveform.

The first voltage waveform VF1 may be different from the second voltage waveform VF2. A peak of the first voltage waveform VF1 may be different from a peak of the second voltage waveform VF2. The peak of he first voltage waveform VF1 may be lower than the peak of the second voltage waveform VF2. A duration of the first voltage waveform VF1 may be different from a duration of the second voltage waveform VF2. The duration of the first voltage waveform VF1 may be shorter than the duration of the second voltage waveform VF2.

According to embodiments, the first voltage waveform VF1 and the second voltage waveform VF2 may be different types of waveforms. For example, the first voltage waveform VF1 may be a square waveform, and the second voltage waveform VF2 may be a triangular waveform. As another example, the first voltage waveform VF1 may be a triangular waveform, and the second voltage waveform VF2 may be a square waveform. As another example, the first voltage waveform VF1 may be a sawtooth waveform, and the second voltage waveform VF2 may be a square waveform.

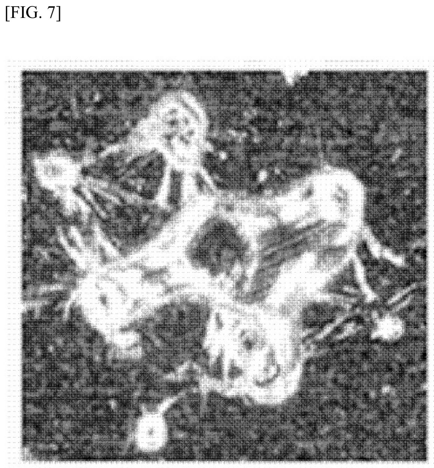

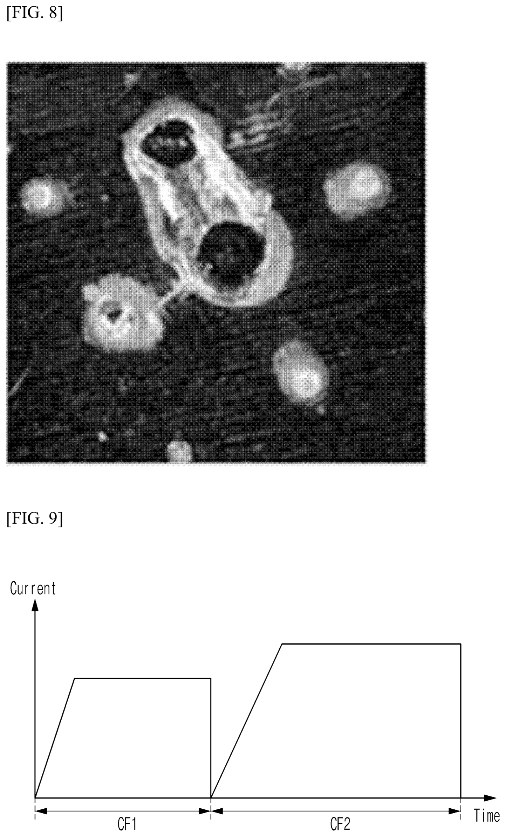

FIGS. 7 and 8 are diagrams for describing an effect of a secondary battery manufacturing method according to embodiments. More specifically, FIG. 7 illustrates resulting beads of the welding of an electrode tab and a battery case according to a comparative example, and FIG. 8 illustrates resulting beads of the welding of an electrode tab and a battery case according to an experimental example.

Referring to FIGS. 7 and 8, the beads according to the experimental example did not substantially include splashes, unlike the comparative example in which a lot of splashes occur. According to the experimental example, a relatively large current carrying area between the electrode tab 120 (see FIG. 4) and the battery case 130 (see FIG. 4) was ensured due to the collapse of the embossed structure EBS (see FIG. 4) to improve stability and reliability of resistance welding.

FIG. 9 is a graph for describing a welding method according to other embodiments. In FIG. 9, the horizontal axis represents time expressed in arbitrary units and the vertical axis represents current expressed in arbitrary units.

Referring to FIGS. 4, 5, and 9, a first current waveform CF1 and a second current waveform CF2 may be applied to the first welding rod W1 and the second welding rod W2. The first current waveform CF1 and the second current waveform CF2 may replace the first and second voltage waveforms CF1 and CF2 of FIG. 6.

According to embodiments, the first current waveform CF1 and the second current waveform CF2 may be square waveforms each including a ramping section. However, embodiments are not limited thereto, and the first current waveform CF1 and the second current waveform CF2 may have various waveforms such as a triangular waveform, a sawtooth waveform, and a sine waveform.

The first current waveform CF1 may be different from the second current waveform CF2. A peak of the first current waveform CF1 may be different from a peak of the second current waveform CF2. The peak of the first current waveform CF1 may be lower than the peak of the second current waveform CF2. A duration of the first current waveform CF1 may be different from a duration of the second current waveform CF2. The duration of the first current waveform CF1 may be shorter than the duration of the second current waveform CF2.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing method comprising:
collapsing an embossed structure of an electrode tab; and
welding a battery case to a collapsed part of the embossed structure of the electrode tab.

2. The secondary battery manufacturing method of claim 1, wherein the collapsing of the embossed structure of the electrode tab results in an increase of a current carrying area between the battery case and the electrode tab.

3. The secondary battery manufacturing method of claim 1, wherein the collapsing of the embossed structure of the electrode tab includes applying a first voltage waveform to the electrode tab by a first electrode rod, and
the welding of the battery case includes applying a second voltage waveform to the electrode tab by the first electrode rod, the second voltage waveform being different from the first voltage waveform.

4. The secondary battery manufacturing method of claim 3, wherein the first voltage waveform applied to the electrode tab softens the electrode tab.

5. The secondary battery manufacturing method of claim 3, wherein a temperature of the electrode tab to which the first voltage waveform is applied is less than or equal to a melting point of the electrode tab.

6. The secondary battery manufacturing method of claim 3, wherein the second voltage waveform applied to the electrode tab melts the electrode tab.

7. The secondary battery manufacturing method of claim 3, wherein a temperature of the electrode tab to which the second voltage waveform is applied is greater than or equal to a melting point of the electrode tab.

8. The secondary battery manufacturing method of claim 3, wherein each of the first voltage waveform and the second voltage waveform includes a square waveform with a ramp section.

9. The secondary battery manufacturing method of claim 3, wherein a first peak of the first voltage waveform is different from a second peak of the second voltage waveform.

10. The secondary battery manufacturing method of claim 3, wherein a first peak of the first voltage waveform is lower than a second peak of the second voltage waveform.

11. The secondary battery manufacturing method of claim 3, wherein a duration of the first voltage waveform is different from a duration of the second voltage waveform.

12. The secondary battery manufacturing method of claim 3, wherein a duration of the first voltage waveform is shorter than a duration of the second voltage waveform.

13. The secondary battery manufacturing method of claim 1, wherein the collapsing of the embossed structure of the electrode tab includes applying a first current waveform to the electrode tab by the first electrode rod, and
the welding of the battery case includes applying a second current waveform to the electrode tab by the first electrode rod, the second current waveform being different from the first current waveform.

14. The secondary battery manufacturing method of claim 13, wherein a first peak of the first current waveform is lower than a second peak of the second current waveform.

15. The secondary battery manufacturing method of claim 13, wherein a first peak of the first current waveform is different from a second peak of the second current waveform.

16. The secondary battery manufacturing method of claim 13, wherein a duration of the first current waveform is different from a duration of the second current waveform.

17. The secondary battery manufacturing method of claim 13, wherein a duration of the first current waveform is shorter than a duration of the second current waveform.
